# EUROPEAN PATENT SPECIFICATION

(11) **EP 4 269 372 B1**
(45) Date of publication and mention of the grant of the patent: **17.12.2025**
(21) Application number: 21909566.8
(22) Date of filing: 24.12.2021
(51) Int. Cl.: C04B 35/584, C04B 35/64

(54) **PREPARATION METHOD OF A HIGH-THERMAL-CONDUCTIVITY SILICON NITRIDE CERAMIC INSULATING PLATE**
HERSTELLUNGSVERFAHREN EINER KERAMIKISOLIERPLATTE AUS SILICIUMNITRID MIT HOHER THERMISCHER LEITFÄHIGKEIT
PROCÉDÉ DE PRÉPARATION D'UNE PLAQUE ISOLANTE EN CÉRAMIQUE-NITRURE DE SILICIUM À CONDUCTIVITÉ THERMIQUE ÉLEVÉE

(30) Priority: 25.12.2020 CN 202011559771
(43) Date of publication of application: 01.11.2023
(73) Proprietor: Sinoma Advanced Nitride Ceramics Co., Ltd., Zibo, Shandong 255000 (CN)
(72) Inventor: ZHANG, Weiru, Zibo, Shandong 255000 (CN); LIANG, Panpan, Zibo, Shandong 255000 (CN); JING, He, Zibo, Shandong 255000 (CN); SUN, Feng, Zibo, Shandong 255000 (CN); XU, Xuemin, Zibo, Shandong 255000 (CN); DONG, Tingxia, Zibo, Shandong 255000 (CN); LV, Peiyuan, Zibo, Shandong 255000 (CN); HE, Xiao, Zibo, Shandong 255000 (CN); XU, Jinmeng, Zibo, Shandong 255000 (CN); WEI, Wenzhao, Zibo, Shandong 255000 (CN); DING, Zhijie, Zibo, Shandong 255000 (CN)
(74) Representative: Canzler & Bergmeier Patentanwälte Partnerschaft mbB
(86) International application number: PCT/CN2021/141240
(87) International publication number: WO 2022/135571

(56) References cited:
- CN-A- 1 842 506
- CN-A- 111 995 403
- CN-A- 112 661 518
- JP-A- 2001 080 967
- US-A1- 2006 128 552

## Description

### CROSS REFERENCE TO RELATED APPLICATION

The present application claims the priority to Chinese Patent Application No. 202011559771.6, titled "HIGH-THERMAL-CONDUCTIVITY SILICON NITRIDE CERAMIC INSULATING SUBSTRATE AND PREPARATION METHOD THEREOF", filed with China National Intellectual Property Administration (CNIPA) on December 25, 2020.

### TECHNICAL FIELD

The present disclosure relates to the technical field of ceramic substrates, in particular to a preparation method of a silicon nitride ceramic insulating substrate.

### BACKGROUND

With the shrinking feature size and increasing integration level, chips have entered the era of very large-scale integration (VLSI). Higher integration level means greater device load capacity and increased heat generation, such that the heat dissipation of high integrated circuits is facing a huge challenge. In view of this, the development of heat-resistant substrate materials with high thermal conductivity is of great significance to the further development of integrated circuits. Currently, the commonly used ceramic substrate materials are aluminum oxide (Al₂O₃) and aluminum nitride (AlN), both of which show certain disadvantages. The substrate made of aluminum oxide has an extremely low thermal conductivity (not greater than 20 W·m⁻¹·k⁻¹); while the substrate made of aluminum nitride has a relatively high thermal conductivity (not greater than 120 W·m⁻¹·k⁻¹), but shows a poor bending strength (not greater than 300 MPa). As a result, neither of these two materials can meet the heat dissipation and load carrying requirements of high integrated circuits.

Silicon nitride ceramics have attracted widespread attention due to a series of excellent properties such as high strength and toughness, excellent high-temperature performances, and desirable theoretical thermal conductivity, and are regarded as ideal substrate materials. However, the silicon nitride ceramics are easy to decompose at high temperatures (about 1,870°C), have high production costs, and cannot meet bending strength and thermal conductivity at the same time.

US2006/128552A1 discloses a highly heat conductive silicon nitride sintered body which contains not less than 2 mass% and not more than 17.5 mass% of a rare earth element in terms of oxides, not less than 0.07 mass% and not more than 0.5 mass% of Fe element in terms of oxides, not less than 0.07 mass% and not more than 0.5 mass% of Ca element in terms of oxides, not less than 0.1 mass% and not more than 0.6 mass% of Al element in terms of oxides, not less than 0.3 mass% and not more than 4 mass% of Mg element in terms of oxides, and not more than 5 mass% (including 0 mass%) of Hf element in terms of oxides.

### SUMMARY

An objective of the present disclosure is to provide a preparation method of a silicon nitride ceramic insulating substrate. In the present disclosure, the silicon nitride ceramic insulating substrate prepared has both high bending strength and high thermal conductivity, and shows a relatively low sintering temperature.

To achieve the above objective, the present disclosure provides the following technical solutions:
The present disclosure provides a preparation method of a silicon nitride ceramic insulating substrate, including the following steps:
mixing a silicon nitride powder, a first sintering aid, a second sintering aid, a third sintering aid, a solvent, and a binder to obtain a mixed slurry;
subjecting the mixed slurry to granulation to obtain a granulated powder;
subjecting the granulated powder to compression molding obtain a ceramic green body;
subjecting the ceramic green body to cold isostatic pressing to obtain a dense green body; and
subjecting the dense green body to binder burn-out and sintering in sequence, and cooling to obtain the silicon nitride ceramic insulating substrate; where
the sintering is conducted at 1,800°C to 1,950°C, and the cooling is conducted at a cooling rate of 10°C/min to 30°C/min;
where the silicon nitride powder, the first sintering aid, the second sintering aid, the third sintering aid are in the following weight percentage: 86% to 96% of the silicon nitride powder, 1% to 5% of the first sintering aid, 2.5% to 8% of the second sintering aid, and 0.5% to 1% of the third sintering aid;
the solvent includes ethanol, and the ethanol is added such that an intermediate slurry has a solid content of 40% to 70%; the binder includes polyvinyl butyral (PVB), and the binder is added at 3 wt.% to 5 wt.% of the intermediate slurry;
the first sintering aid is magnesium oxide;
the second sintering aid is hafnium oxide; and
the third sintering aid is one or more selected from the group consisting of boron oxide, ferric oxide, calcium oxide, and titanium dioxide; and
the silicon nitride ceramic insulating substrate has a thermal conductivity of greater than or equal to 100 W·m⁻¹·k⁻¹,
wherein the mixing includes: subjecting the silicon nitride powder, the first sintering aid, the second sintering aid, the third sintering aid, and the solvent to first stirring milling to obtain the intermediate slurry; and adding the binder into the intermediate slurry to allow second stirring milling to obtain the mixed slurry.

Preferably, the compression molding is conducted at a pressure of 10 T to 15 T for 15 s to 20 s.

Preferably, the cold isostatic pressing is conducted at a pressure of 300 MPa to 350 MPa for 20 min.

Preferably, the binder burn-out is conducted at 400°C to 600°C for 6 h to 12 h.

Preferably, the sintering is conducted for 12 h to 24 h.

In the present disclosure, magnesium oxide is used as a first sintering aid. During the sintering, the magnesium oxide reacts with a raw material silicon nitride powder to form a liquid phase, which can reduce a sintering temperature, save a production costs, and improve a density and a bending strength of the silicon nitride ceramic insulating substrate. Hafnium oxide is used as a second sintering aid. The hafnium oxide shows a strong oxygen binding capacity, and combines with impurity oxygen in the raw material silicon nitride powder during the sintering, so as to eliminate a lattice oxygen content and improve a thermal conductivity of the silicon nitride ceramic insulating substrate. A third sintering aid can promote a reaction between the liquid phase and the silicon nitride powder to form a solid solution during the sintering. In this way, an amorphous phase at a grain boundary is reduced, and the bending strength of a resulting product is improved while ensuring a high thermal conductivity.

In addition, compared with the prior art, the preparation method of the present disclosure can also obtain an ultra-thin and large-size ceramic substrate and save a production cost. In the prior art, large-size ceramic substrates are generally prepared by grinding thicker substrates, thus wasting a lot of raw materials. Alternatively, thin substrates are obtained by means of laser cutting, which has high production costs and is impossible to directly prepare thinner substrates. This is due to the fact that large-size substrates are highly thin to cause bending cracks during the sintering. In order to prevent bending cracking, it is necessary to increase the bending strength of the ceramic substrate in the prior art, but the thermal conductivity may be sacrificed once the bending strength is increased. Therefore, it is difficult to obtain an ultra-thin and large-size substrate with high thermal conductivity and high bending strength. In the present disclosure, the high thermal conductivity and high bending strength can be taken into account by adopting the above formula. An improvement of the bending strength prevents cracking and bending from occurrence during the sintering, thereby solving the difficult problem in the prior art that it is difficult to prepare ultra-thin and large-size substrates by direct pressing. The silicon nitride ceramic insulating substrate has a size as high as 190 mm×138 mm×0.25 mm.

The present disclosure further provides a preparation method of the silicon nitride ceramic insulating substrate. By controlling the sintering temperature and cooling rate, it is conducive to the full growth of silicon nitride ceramic grains, thereby reducing grain boundaries and improving thermal conductivity.

The results of the examples in the present disclosure show that the silicon nitride ceramic insulating substrate has a bending strength of greater than or equal to 600 MPa, a thermal conductivity of greater than or equal to 100 W·m⁻¹·k⁻¹, and a dielectric constant of 7 to 9.

### DETAILED DESCRIPTION OF THE EMBODIMENTS

The present disclosure is further described below with reference to the accompanying drawings and examples.

The present disclosure provides a preparation method of a silicon nitride ceramic insulating substrate, including the following steps:
mixing a silicon nitride powder, a first sintering aid, a second sintering aid, a third sintering aid, a solvent, and a binder to obtain a mixed slurry;
subjecting the mixed slurry to granulation to obtain a granulated powder;
subjecting the granulated powder to compression molding obtain a ceramic green body;
subjecting the ceramic green body to cold isostatic pressing to obtain a dense green body; and
subjecting the dense green body to binder burn-out and sintering in sequence, and cooling to obtain the silicon nitride ceramic insulating substrate; where
the sintering is conducted at 1,800°C to 1,950°C, and the cooling is conducted at a cooling rate of 10°C/min to 30°C/min,
wherein the silicon nitride powder, the first sintering aid, the second sintering aid, the third sintering aid are in the following weight percentage: 86% to 96% of the silicon nitride powder, 1% to 5% of the first sintering aid, 2.5% to 8% of the second sintering aid, and 0.5% to 1% of the third sintering aid;
the solvent comprises ethanol, and the ethanol is added such that an intermediate slurry has a solid content of 40% to 70%; the binder comprises polyvinyl butyral (PVB), and the binder is added at 3 wt.% to 5 wt.% of the intermediate slurry;
the first sintering aid is magnesium oxide;
the second sintering aid is hafnium oxide; and
the third sintering aid is one or more selected from the group consisting of boron oxide, ferric oxide, calcium oxide, and titanium dioxide; and
the silicon nitride ceramic insulating substrate has a thermal conductivity of greater than or equal to 100 W·m⁻¹·k⁻¹,
wherein the mixing includes: subjecting the silicon nitride powder, the first sintering aid, the second sintering aid, the third sintering aid, and the solvent to first stirring milling to obtain the intermediate slurry; and adding the binder into the intermediate slurry to allow second stirring milling to obtain the mixed slurry.

In the present disclosure, the silicon nitride powder, the first sintering aid, the second sintering aid, the third sintering aid, a solvent, and a binder are mixed to obtain a mixed slurry.

In the present disclosure, the ethanol is added such that the intermediate slurry has a solid content of preferably 45% to 65%, and more preferably 50% to 60%.

In the present disclosure, the binder includes PVB; the binder is added at preferably 4 wt.% of the intermediate slurry. The binder makes the raw materials agglomerate, thus facilitating subsequent granulation.

In the present disclosure, the first stirring milling and the second stirring milling are conducted preferably using silicon nitride balls as a grinding medium, with a ball-to-material ratio of preferably 1:1.

In the present disclosure, the first stirring milling is conducted for preferably 24 h to 36 h, and the second stirring milling is conducted for preferably 24 h to 48 h. The first stirring milling and the second stirring milling are conducted independently at a rotational speed of preferably 25 rpm to 35 rpm, more preferably 30 rpm.

In the present disclosure, the mixed slurry is subjected to granulation to obtain a granulated powder.

In the present disclosure, the granulation refers to preferably spray granulation. The spray granulation is preferably conducted at a feed pump pressure of 0.6 MPa to 0.8 MPa, an inlet temperature of 150°C to 180°C, an outlet temperature of 50°C to 70°C, and a cyclone pressure difference of 0.8 KPa to 1 KPa. Further preferably, the spray granulation is conducted at a feed pump pressure of 0.65 MPa to 0.75 MPa, an inlet temperature of 160°C to 170°C, an outlet temperature of 55°C to 65°C, and a cyclone pressure difference of 0.85 KPa to 0.95 KPa.

In the present disclosure, after the spray granulation, an obtained product is preferably passed through a 100-mesh sieve, and an undersize is taken as the granulated powder. The spray granulation is beneficial to obtain a granulated powder with desirable fluidity, which is suitable for compression molding. The granulated powder has an apparent density of (0.8-1) g/m³ and a flow time of 55.68 s to 58.07 s.

In the present disclosure, the granulated powder is subjected to compression molding obtain a ceramic green body. In the present disclosure, the granulated powder is preferably introduced into a mold of a dry powder press, and then subjected to compression molding by a pressure head. The compression molding is conducted at a pressure of preferably 10 T to 15 T, more preferably 11 T to 14 T for preferably 15 s to 20 s, more preferably 16 s to 18 s. There is no special requirement on a size of the mold of the dry powder press, and is determined according to a size of a target ceramic insulating substrate. When the target ceramic insulating substrate has a size of 190 mm×138 mm×0.25 mm, the mold of the dry powder press has a size of 272 mm×198 mm, and the mold of the dry powder press has a height of preferably greater than 0.5 mm.

In the present disclosure, the compression molding can obtain a large-size ceramic green body. With the formula of the silicon nitride ceramic insulating substrate, it is possible to obtain large-size silicon nitride ceramic insulating substrate with high thermal conductivity.

In the present disclosure, the ceramic green body is subjected to cold isostatic pressing to obtain a dense green body.

In the present disclosure, the cold isostatic pressing specifically includes preferably: putting the ceramic green body into a vacuum bag, putting a steel plate as a substrate into the vacuum bag, conducting vacuumizing, and conducting the cold isostatic pressing in a cavity of a cold isostatic press. The vacuumizing is conducted at a vacuum degree of preferably -0.1 MPa. The steel plate has a size preferably the same as that of the ceramic green body.

In the present disclosure, the steel plate as the substrate can prevent the ceramic green body from being deformed and broken during the cold isostatic pressing.

In the present disclosure, the cold isostatic pressing is conducted at a pressure of preferably 300 MPa to 350 MPa, more preferably 310 MPa to 340 MPa for preferably 20 min. Controlling the conditions of the cold isostatic pressing within the above range can increase a compactness of the ceramic green body, thus facilitating subsequent sintering and molding.

In the present disclosure, the dense green body is subjected to binder burn-out and sintering in sequence, and cooled to obtain the silicon nitride ceramic insulating substrate.

In the present disclosure, preferably, before the binder burn-out and the sintering are conducted, the dense green body is stacked into a crucible, a graphite plate is placed on a top of a resulting stacked dense green body, and the binder burn-out and the sintering are conducted in a multi-functional gas pressure sintering furnace.

In the present disclosure, the graphite plate has a weight preferably 1 to 2 times, more preferably 1.2 to 1.8 times that of the dense green body. The graphite plate can prevent the dense green body from cracking and deforming during the binder burn-out and the sintering.

In the present disclosure, the binder burn-out is conducted at preferably 400°C to 600°C, more preferably 450°C to 550°C for preferably 6 h to 12 h, more preferably 8 h to 10 h. A required temperature of the binder burn-out is obtained by heating at preferably not more than 10°C/min. When a heating rate is greater than 10°C/min, the dense green body is prone to cracking.

In the present disclosure, the binder burn-out is preferably conducted in an air atmosphere. During the binder burn-out, organic matters in the dense green body are discharged.

In the present disclosure, after the binder burn-out is completed, the temperature is directly raised to a sintering temperature on the basis of the binder burn-out temperature to conduct the sintering.

In the present disclosure, a required temperature of the sintering is obtained by heating at preferably not more than 10°C/min. When a heating rate is greater than 10°C/min, the green body is prone to cracking.

In the present disclosure, the sintering is conducted at 1,800°C to 1,950°C, preferably 1,850°C to 1,900°C for preferably 6 h to 12 h, more preferably 6 h to 10 h. The sintering is preferably conducted under an air atmosphere. In an initial stage of the sintering, since the first sintering aid and the third sintering aid react with SiₓO_{y} on a surface of the silicon nitride powder, a resulting reaction product has a lower melting point and forms a liquid phase. As the reaction progresses, the liquid phase flows to fill pores between the particles, thereby promoting sintering and densification of the material, and improving the bending strength of the product. The above process is accompanied by the transformation of α-phase silicon nitride into β-phase silicon nitride, thereby improving thermal conductivity.

In the present disclosure, after the sintering is completed, an obtained sintered product is cooled at 10°C/min to 30°C/min. Controlling the cooling rate within the above range is beneficial to the full growth of silicon nitride ceramic grains, thereby reducing grain boundaries and improving thermal conductivity.

In the present disclosure, after the cooling is completed, an obtained ceramic blank is preferably post-processed to obtain the silicon nitride ceramic insulating substrate. There is no special requirement for a post-processing method, as long as the post-processing method well-known in the art can ensure that the thickness and surface roughness of the silicon nitride ceramic insulating substrate meet the precision requirements. Specifically, the post-processing may be grinding. The silicon nitride ceramic insulating substrate has a roughness of preferably less than 5 µm.

The preparation method of the silicon nitride ceramic insulating substrate provided by the present disclosure will be described in detail below in conjunction with examples, but should not be construed as limiting the scope of the present disclosure.

In the following examples, the silicon nitride powder has a D50 of less than 1 µm, an α phase content of greater than 90%, a specific surface area of less than 15 m²/g, an oxygen content of less than 1 wt.%, an Fe content of less than 0.0005 wt.%, an Al content of less than 0.001 wt.%, and a Ca content of less than 0.0001 wt.%. The magnesium oxide, hafnium oxide, boron oxide, ferric oxide, calcium oxide, and titanium dioxide used all have a D50 of less than 1 µm.

### Examples 1 to 16 and Comparative Examples 1 to 5

According to the ratio and type of raw materials shown in Table 1, a silicon nitride powder and a sintering aid were subjected to stirring milling for 30 h with alcohol as a solvent medium and silicon nitride balls as a grinding medium (at a ball-to-material ratio of 1:1) to obtain an intermediate slurry (with a solid phase content of 60%). 4 wt.% of PVB was added to the intermediate slurry and ground for 48 h to obtain a mixed slurry. The mixed slurry was subjected to spray granulation (at a feed pump pressure of 0.7 MPa, an inlet temperature of 170°C, an outlet temperature of 60°C, and a cyclone pressure difference of 0.9 KPa), and passed through a 100-mesh sieve to obtain a granulated powder suitable for compression molding (at an apparent density of (0.8-1) g/m³ and a flow time of 55.68 s to 58.07 s). The granulated powder was introduced into a mold of a dry powder press with a size of 272 mm×198 mm×0.8 mm to allow compression molding at a pressure of 10 T for 20 s to obtain a ceramic green body. The ceramic green body and a steel plate were put into a vacuum bag, vacuumized, and subjected to cold isostatic pressing at a pressure of 300 MPa for 20 min to obtain a dense green body. The dense green body was stacked on a crucible, and a graphite plate was placed on a top of the stacked dense green body. The two were heated to 600°C at 10°C/min in a multi-functional gas pressure sintering furnace for 12 h to allow binder burn-out, and then heated to a sintering temperature to allow sintering for 24 h, and cooled at not more than 30°C/min to obtain a ceramic blank. The ceramic blank was processed by grinding, to obtain a silicon nitride ceramic insulating substrate with a size of 190 mm×138 mm×0.25 mm and a roughness of less than 5 µm. The specific sintering temperature, cooling rate, and performance indicators were shown in Table 1.

**Table 1 Reaction conditions and properties of Examples 1 to 16 and Comparative Examples 1 to 5**

| Sample | | Raw materi al (wt%) | Sintering aid dosage (wt%) | | | | | | Sintering temperat ure (°C) | Sinteri ng coolin g rate (°C/mi n) | Thermal conductiv ity (W·m⁻¹·k ⁻¹) | Three-po int bending strength (MPa) |
|---|---|---|---|---|---|---|---|---|---|---|---|---|
| | | Si₃N₄ | Mg O | Hf O₂ | B₂ O₃ | Fe₂ O₃ | Ca O | Ti O₂ | | | | |
| Example | 1 | 96 | 1 | 2.5 | 0.5 | / | / | / | 1850 | 30 | 102 | 675 |
| | 2 | 96 | 1 | 2.5 | 0.5 | / | / | / | 1900 | 30 | 106 | 668 |
| | 3 | 96 | 1 | 2.5 | 0.5 | / | / | / | 1900 | 20 | 110 | 650 |
| | 4 | 96 | 1 | 2.5 | 0.5 | / | / | / | 1900 | 10 | 120 | 608 |
| | 5 | 96 | 1 | 2.5 | / | 0.5 | / | / | 1850 | 30 | 101 | 678 |
| | 6 | 96 | 1 | 2.5 | / | 0.5 | / | / | 1900 | 20 | 107 | 620 |
| | 7 | 96 | 1 | 2.5 | / | / | 0.5 | / | 1850 | 30 | 103 | 662 |
| | 8 | 96 | 1 | 2.5 | / | / | / | 0.5 | 1850 | 30 | 104 | 659 |
| | 9 | 87 | 4 | 8 | 1 | / | / | / | 1850 | 30 | 100 | 680 |
| | 1 0 | 87 | 4 | 8 | 1 | / | / | / | 1900 | 10 | 116 | 610 |
| | 1 1 | 87 | 4 | 8 | / | 1 | / | / | 1850 | 30 | 103 | 665 |
| | 1 2 | 87 | 4 | 8 | / | / | 1 | / | 1850 | 30 | 105 | 655 |
| | 1 3 | 87 | 4 | 8 | / | / | / | 1 | 1850 | 30 | 102 | 670 |
| | 1 4 | 92 | 3 | 4 | 0.5 | 0.5 | / | / | 1870 | 20 | 103 | 630 |
| | 1 5 | 90 | 3 | 6 | 0.5 | / | 0.5 | / | 1850 | 20 | 110 | 608 |
| | 1 6 | 94 | 2 | 3 | / | / | / | 1 | 1850 | 20 | 101 | 622 |
| Comparat ive Examples | 1 | 96 | 1 | 2.5 | 0.5 | / | / | / | 1850 | 50 | 90 | 690 |
| | 2 | 96.5 | 1 | 2.5 | 0.5 | / | / | / | 1700 | 30 | 60 | 690 |
| | 3 | 88.5 | 1 | 10 | / | 0.5 | / | / | 1850 | 30 | 45 | 720 |
| | 4 | 94.5 | 1 | 2.5 | / | / | 2 | / | 1850 | 40 | 30 | 700 |
| | 5 | 86 | 4 | 8 | / | / | 2 | / | 1850 | 30 | 35 | 750 |

As shown in Table 1, the silicon nitride ceramic insulating substrate had a bending strength of greater than or equal to 600 MPa and a thermal conductivity of greater than or equal to 100 W·m⁻¹·k⁻¹. Compared with the examples of the present disclosure: in Comparative Example 1, the thermal conductivity of the product was poor because the cooling rate was too high. In Comparative Example 2, the sintering temperature was too low, resulting in low thermal conductivity of the product. In Comparative Example 3, since the content of the second sintering aid hafnium oxide was too high, it was not conducive to product sintering, resulting in extremely low thermal conductivity of the product. In Comparative Example 4, since the content of the third sintering aid calcium oxide was too high and the cooling rate was high, the product showed extremely high three-point bending strength, but extremely poor thermal conductivity. In Comparative Example 5, the content of the third sintering aid calcium oxide was too high, resulting in low thermal conductivity of the product.

The above description of examples is merely provided to help understand the method of the present disclosure and a core idea thereof. It should be noted that, several improvements and modifications may be made by a person of ordinary skill in the art without departing from the principle of the present disclosure, and these improvements and modifications should also fall within the protection scope of the present disclosure. Various amendments to these embodiments are apparent to those of professional skill in the art, and the general principles defined herein may be implemented in other embodiments without departing from scope of the present disclosure. Thus, the present disclosure is not limited to the embodiments shown herein but is defined by the claims.

## Claims

1. A preparation method of a silicon nitride ceramic insulating substrate, comprising the following steps:
mixing a silicon nitride powder, a first sintering aid, a second sintering aid, a third sintering aid, a solvent, and a binder to obtain a mixed slurry;
subjecting the mixed slurry to granulation to obtain a granulated powder;
subjecting the granulated powder to compression molding obtain a ceramic green body;
subjecting the ceramic green body to cold isostatic pressing to obtain a dense green body; and
subjecting the dense green body to binder burn-out and sintering in sequence, and cooling to obtain the silicon nitride ceramic insulating substrate; wherein
the sintering is conducted at 1,800°C to 1,950°C, and the cooling is conducted at a cooling rate of 10°C/min to 30°C/min;
wherein the silicon nitride powder, the first sintering aid, the second sintering aid, the third sintering aid are in the following weight percentage: 86% to 96% of the silicon nitride powder, 1% to 5% of the first sintering aid, 2.5% to 8% of the second sintering aid, and 0.5% to 1% of the third sintering aid;
the solvent comprises ethanol, and the ethanol is added such that an intermediate slurry has a solid content of 40% to 70%; the binder comprises polyvinyl butyral (PVB), and the binder is added at 3 wt.% to 5 wt.% of the intermediate slurry;
the first sintering aid is magnesium oxide;
the second sintering aid is hafnium oxide; and
the third sintering aid is one or more selected from the group consisting of boron oxide, ferric oxide, calcium oxide, and titanium dioxide; and
the silicon nitride ceramic insulating substrate has a thermal conductivity of greater than or equal to 100 W·m⁻¹·k⁻¹,
wherein the mixing comprises: subjecting the silicon nitride powder, the first sintering aid, the second sintering aid, the third sintering aid, and the solvent to first stirring milling to obtain the intermediate slurry; and adding the binder into the intermediate slurry to allow second stirring milling to obtain the mixed slurry.

2. The preparation method according to claim 1, wherein the compression molding is conducted at a pressure of 10 T to 15 T for 15 s to 20 s.

3. The preparation method according to claim 1, wherein the cold isostatic pressing is conducted at a pressure of 300 MPa to 350 MPa for 20 min.

4. The preparation method according to claim 1, wherein the binder burn-out is conducted at 400°C to 600°C for 6 h to 12 h.

5. The preparation method according to claim 1, wherein the sintering is conducted for 12 h to 24 h.

## Patentansprüche

1. Verfahren zur Herstellung eines isolierenden Siliziumnitrid-Keramiksubstrats, umfassend die folgenden Schritte:
Mischen eines Siliziumnitridpulvers, eines ersten Sinterhilfsmittels, eines zweiten Sinterhilfsmittels, eines dritten Sinterhilfsmittels, eines Lösungsmittels und eines Bindemittels, um eine gemischte Schlämme zu erhalten;
Unterwerfen der gemischten Schlämme einer Granulierung, um ein granuliertes Pulver zu erhalten;
Unterwerfen des granulierten Pulvers einem Formpressen, um einen keramischen Grünkörper zu erhalten;
Unterwerfen des keramischen Grünkörpers einem kaltisostatischen Pressen, um einen dichten Grünkörper zu erhalten; und
Unterwerfen des dichten Grünkörpers einem Ausbrennen und Sintern des Bindemittels der Reihe nach und Abkühlen, um das isolierende Siliziumnitrid-Keramiksubstrat zu erhalten; wobei
das Sintern bei 1.800 °C bis 1.950 °C durchgeführt wird und das Abkühlen mit einer Abkühlrate von 10 °C/min bis 30 °C/min durchgeführt wird;
wobei das Siliziumnitridpulver, das erste Sinterhilfsmittel, das zweite Sinterhilfsmittel, das dritte Sinterhilfsmittel in dem folgenden Gewichtsprozentsatz vorliegen: 86 % bis 96 % des Siliziumnitridpulvers, 1 % bis 5 % des ersten Sinterhilfsmittels, 2,5 % bis 8 % des zweiten Sinterhilfsmittels und 0,5 % bis 1 % des dritten Sinterhilfsmittels;
das Lösungsmittel Ethanol umfasst und das Ethanol so zugegeben wird, dass eine Zwischenschlämme einen Feststoffgehalt von 40 % bis 70 % aufweist; das Bindemittel Polyvinylbutyral (PVB) umfasst und das Bindemittel mit 3 Gew.-% bis 5 Gew.-% der Zwischenschlämme zugegeben wird;
das erste Sinterhilfsmittel Magnesiumoxid ist;
das zweite Sinterhilfsmittel Hafniumoxid ist; und
das dritte Sinterhilfsmittel eines oder mehrere ausgewählt aus der Gruppe bestehend aus Boroxid, Eisenoxid, Kalziumoxid und Titandioxid ist; und
das isolierende Siliziumnitrid-Keramiksubstrat eine Wärmeleitfähigkeit von mehr als oder gleich 100 W·m⁻¹·k⁻¹ aufweist,
wobei das Mischen umfasst: Unterwerfen des Siliziumnitridpulvers, des ersten Sinterhilfsmittels, des zweiten Sinterhilfsmittels, des dritten Sinterhilfsmittels und des Lösungsmittels einem ersten Rührmahlen, um die Zwischenschlämme zu erhalten; und Zugeben des Bindemittels in die Zwischenschlämme, um ein zweites Rührmahlen zu ermöglichen, um die gemischte Schlämme zu erhalten.

2. Verfahren zur Herstellung nach Anspruch 1, wobei das Formpressen bei einem Druck von 10 T bis 15 T für 15 s bis 20 s durchgeführt wird.

3. Verfahren zur Herstellung nach Anspruch 1, wobei das kaltisostatische Pressen bei einem Druck von 300 MPa bis 350 MPa für 20 min durchgeführt wird.

4. Verfahren zur Herstellung nach Anspruch 1, wobei das Ausbrennen des Bindemittels bei 400 °C bis 600 °C für 6 h bis 12 h durchgeführt wird.

5. Verfahren zur Herstellung nach Anspruch 1, wobei das Sintern für 12 h bis 24 h durchgeführt wird.

## Revendications

1. Procédé de préparation d'un substrat isolant en céramique de nitrure de silicium, comprenant les étapes suivantes :
mélanger une poudre de nitrure de silicium, un premier agent de frittage, un deuxième agent de frittage, un troisième agent de frittage, un solvant et un liant pour obtenir une suspension mélangée ;
soumettre la suspension mélangée à une granulation pour obtenir une poudre granulée ;
soumettre la poudre granulée à un moulage par compression pour obtenir un corps vert en céramique ;
soumettre le corps vert en céramique à un pressage isostatique à froid pour obtenir un corps vert dense ; et
soumettre le corps vert dense à une combustion de liant et un frittage en séquence, et refroidir pour obtenir le substrat isolant en céramique de nitrure de silicium ; dans lequel
le frittage est effectué à 1 800 °C à 1 950 °C, et le refroidissement est effectué à une vitesse de refroidissement de 10 °C/min à 30 °C/min ;
dans lequel la poudre de nitrure de silicium, le premier agent de frittage, le deuxième agent de frittage, le troisième agent de frittage sont dans le pourcentage en poids suivant : 86 % à 96 % de la poudre de nitrure de silicium, 1 % à 5 % du premier agent de frittage, 2,5 % à 8 % du deuxième agent de frittage, et 0,5 % à 1 % du troisième agent de frittage ;
le solvant comprend de l'éthanol, et l'éthanol est ajouté de sorte qu'une suspension intermédiaire a une teneur en solides de 40 % à 70 % ; le liant comprend du polyvinylbutyral (PVB), et le liant est ajouté à 3 % en poids à 5 % en poids de la suspension intermédiaire ;
le premier agent de frittage est de l'oxyde de magnésium ;
le deuxième agent de frittage est de l'oxyde d'hafnium ; et
le troisième agent de frittage est un ou plusieurs choisis dans le groupe constitué par l'oxyde de bore, l'oxyde ferrique, l'oxyde de calcium et le dioxyde de titane ; et
le substrat isolant en céramique de nitrure de silicium a une conductivité thermique supérieure ou égale à 100 W·m⁻¹·k⁻¹,
dans lequel le mélange comprend : soumettre la poudre de nitrure de silicium, le premier agent de frittage, le deuxième agent de frittage, le troisième agent de frittage et le solvant à un premier broyage par agitation pour obtenir la suspension intermédiaire ; et ajouter le liant dans la suspension intermédiaire pour permettre un deuxième broyage par agitation pour obtenir la suspension mélangée.

2. Procédé de préparation selon la revendication 1, dans lequel le moulage par compression est effectué à une pression de 10 T à 15 T pendant 15 s à 20 s.

3. Procédé de préparation selon la revendication 1, dans lequel le pressage isostatique à froid est effectué à une pression de 300 MPa à 350 MPa pendant 20 min.

4. Procédé de préparation selon la revendication 1, dans lequel la combustion de liant est effectuée à 400 °C à 600 °C pendant 6 h à 12 h.

5. Procédé de préparation selon la revendication 1, dans lequel le frittage est effectué pendant 12 h à 24 h.
